# EUROPEAN PATENT SPECIFICATION

(11) **EP 0 754 363 B1**
(45) Date of publication and mention of the grant of the patent: **21.10.1998**
(21) Application number: 95913185.5
(22) Date of filing: 24.03.1995
(51) Int. Cl.: H02K 5/04, H02K 5/10

(54) **ELEVATOR MACHINERY**
AUFZUGSMASCHINERIE
MECANISME D'ELEVATEUR

(30) Priority: 07.04.1994 FI 941599
(43) Date of publication of application: 22.01.1997
(73) Proprietor: Kone Corporation, 00330 Helsinki (FI)
(72) Inventor: HAKALA, Harri, FIN-05830 Hyvinkää (FI); MUSTALAHTI, Jorma, FIN-05620 Hyvinkää (FI); AULANKO, Esko, FIN-04230 Kerava (FI)
(74) Representative: Zipse & Habersack
(86) International application number: PCT/FI95/00159
(87) International publication number: WO 95/28028

(56) References cited:
- CH-A- 682 865
- DE-A- 3 240 826
- US-A- 3 320 450
- US-A- 5 018 603

## Description

The present invention relates to an elevator motor as defined in the preamble of claim 1.

The physical dimensions of an elevator machinery affect the size of the elevator shaft and/or the building itself, depending on where the machinery is located. When the machinery is placed in or beside the elevator shaft or in a machine room, the thickness of the machinery is of essential importance with respect to the space required.

An elevator machinery can also be implemented using a disc-type motor, e.g. like the elevator motor presented in fig. 8 of patent publication US 5,018,603. The motors described in this publication are clearly more compact and flatter in the lengthwise direction of the motor shaft than conventional geared elevator machineries. However, the machineries presented in the publication are clearly designed for installation in a machine room. The rotor structure in these elevator machineries consists of a separate iron packet attached to the rotor disc, the windings being placed in the iron packet.

In this document at an outer ring surface of troughlike rotor a brake is provided and there is an essential gap between the stator and the adjacent edge of the troughlike rotor. This construction allows the entrance of dirt, particularly fine dust from brake surfaces into the cavity with the motor windings.

Previously known elevator machineries using a disc-type motor have the drawback that detrimental particles, such as ferromagnetic dust, may gather from the air in the space of the stator and rotor windings.

The object of the present invention is to produce a new solution for a disc-type motor of an elevator machinery, designed to prevent detrimental particles from getting into the winding space of the motor.

The elevator machinery of the invention is characterized by the features of claim 1. Other embodiments of the invention are characterized by the features presented in the other claims.

The invention provides a way to block the entry of detrimental particles into the winding space of a disc-type elevator motor, thus ensuring that the winding space remains clean and permitting longer maintenance intervals of the motor.

The elevator motor of the invention uses a simple sealing structure. The stator disc can be provided with an integrated sealing area during manufacture, thereby reducing the manufacturing costs. The sealing can be implemented using any of the commonest seal types based on a sliding sealing function, such as a felt seal, a lap seal or a brush seal. It is also possible to use labyrinth or combination sealing. Providing an elevator motor with a sealing as provided by the invention is useful in all disc-type elevator motors and very useful in elevator motors in which rotor excitation is implemented using permanent magnets attached to the rotor disc.

In the invention, the elevator motor is integrated as a part of the elevator machinery so as to produce a very flat and compact machinery. Actually one cannot directly tell which part of the assembly belongs to the elevator machinery and which part belongs to the elevator motor, because in fact the elevator machinery is built around the elevator motor. The elevator machinery is suited for installation in a machine room, in the counterweight of the elevator or in the elevator shaft.

The invention is described by the aid of two embodiments, in which
- Fig. 1: presents an elevator machinery according to the invention, seen from the direction of the shaft,
- Fig. 2: presents an elevator machinery with a motor employing a sealing system according to the invention, and
- Fig. 3: presents another elevator machinery implemented according to the invention.

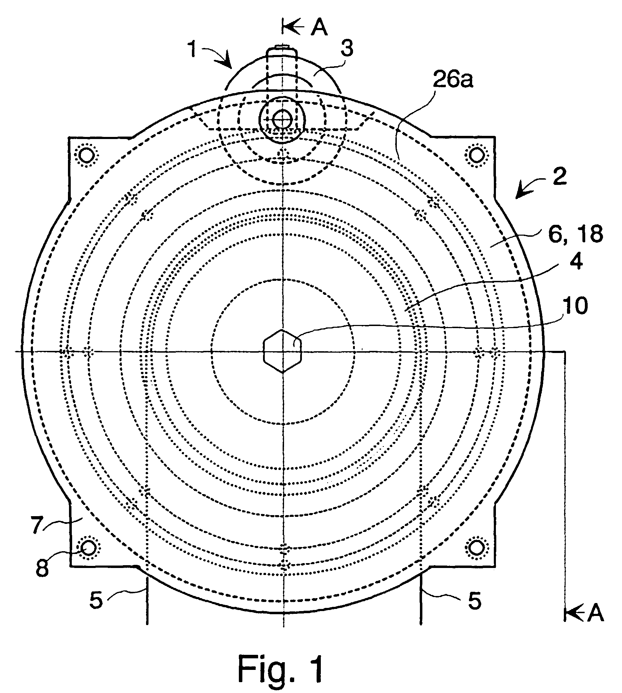

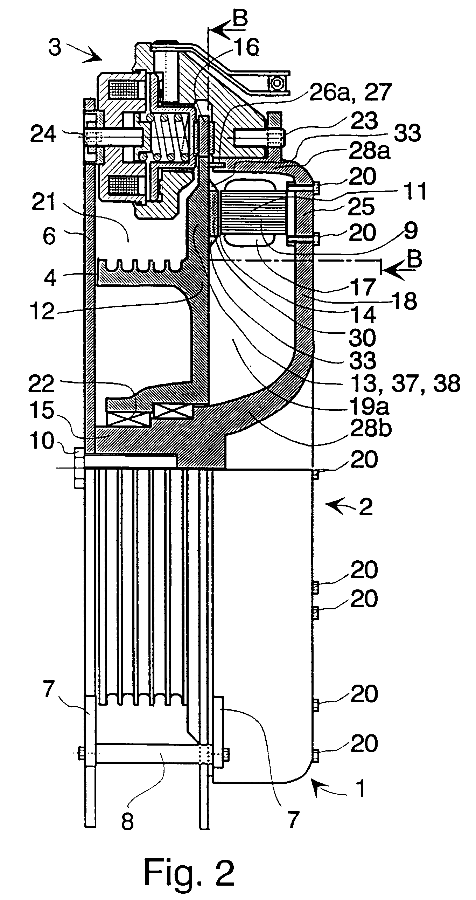

Fig. 1 shows a front view of a gearless elevator machinery 1 according to the invention, comprising a disc-type elevator motor 2, a disc brake 3 and a traction sheave 4. The elevator ropes 5 are passed around the traction sheave 4. The elevator machinery is held together by fixing elements 8 placed between lugs 7 provided in the stator disc 18 and in the support 6 attached to it. In addition, another fixing element 10 is provided in the central part of the machinery to join the stator disc 18 and the support 6 together. The brake is attached to the support and to the stator disc 18. Fig. 2 shows the machneiry as sectioned along fraction line A-A. The motor may be e.g. a synchronous motor or a commutating d.c. motor.

Fig. 2 presents the elevator machinery 1 of Fig. 1 as sectioned along line A-A. The machinery 1 comprises an elevator motor 2, a disc brake 3 with a brake disc 16, and a traction sheave 4. The figure is magnified in the lengthwise direction of the motor shaft 15 to render it more readable. Therefore, in reality the elevator machinery 1 is flatter than its representation in Fig. 2. The main parts of the motor are the rotor 13 and the stator disc 18, along with the supporting plate 6 attached to it and the shaft 15. The rotor comprises a rotor disc 12, with permanent magnets and a traction sheave attached to it.

The permanent magnets 30 are fixed to the surface 36 of the rotor disc 12 in succession so as to form an annular ring. The part of the rotor disc 12 which lies under the permanent magnets 30 acts both as a magnetic circuit 38 and as a supporting structure 37 of the rotor disc 12. The permanent magnets may vary in shape and they can be divided into smaller magnets placed side by side or in succession.

The permanent magnets 30 and the stator 9 are protected against external particles by an annular capsule and an annular sealing placed between the stator and rotor discs. The sealing may be attached either to the stator disc or to the rotor disc. In Fig. 2, the sealing is attached to the stator disc 18. The annular capsule consists of a ringlike cavity 19a formed by three walls which leave the cavity open on the side facing the rotor disc 12.

The outer annular wall 28a of the cavity 19a is directed towards the rotor disc 12 and the inner wall 28b is joined with the shaft 15. Between walls 28a and 28b is a wall 25 directed towards the shaft. If the length of the shaft 15 is extended, the inner wall 28b can be thought of as forming part of the shaft 15, and the wall directed towards the shaft as being directly attached to the shaft 15. The stator 9 has a stator core packet of stampings 11 with a winding 17. The stator has an annular shape and is placed near the outer wall 28a. If necessary, the stator may also be divided into separate sectors. The stator core packet 11 together with the winding 17 is attached to the cavity wall 25 perpendicular to the shaft by means of fixing elements 20, preferably screws. If desirable, the stator core packet can be attached to any one of the cavity walls.

The outermost annular wall 28a of the stator disc 18 is provided with a sealing 26a which touches the rotor disc 12, thus closing the cavity 19a (capsule), enclosing both the stator 9 and the permanent magnets 30 of the rotor 13. One of the walls of the closed cavity 19a is thus formed by the rotor disc 12. The sealing stop face in the rotor disc 12 lies between the brake disc 16 and the circle formed by the permanent magnets 30. The fixing element 27 required for the attachment of the sealing 26a is implemented as a groove in that wall 28a of the cavity 19a in the stator disc 18 which is oriented in the direction of the shaft 15. The sealing 26a may be e.g. a felt seal. A seat for the seal may be integrated with the stator disc 18 during manufacture, so the sealing can be effected at a low manufacturing cost. The seal used may be any one of the commonest sliding-contact seal types, such as a felt seal, lap seal or brush seal. It is also possible to use a labyrinth seal and an annular band gathering magnetic dust, either alone or as a combination consisting of a magnetic band and one of the above-mentioned seal types, e.g. a brush seal. Alternatively, the sealing can be placed on the rotor disc, in which case the sealing stop face is on the stator disc. In the case of a labyrinth seal, annular grooves and ridges are formed both in the stator disc and the rotor disc.

The traction sheave 4 is integrated with the rotor disc 12 or it may also be a separate body attached to the disc. The diameter of the traction sheave 4 is smaller than the diameter of the circle formed by the permanent magnets 30 or that of the stator. The rotor disc is provided with a ring-shaped brake disc attached to the rotor as an extension of its top circle. Thus, the brake disc is substantially an immediate extension of the rotor disc, yet with a narrow annular area for a sealing betweeen the rotor bars and the brake disc.

The rotor disc can be advantageously manufactured by integrating the rotor disc, traction sheave and brake disc into a single structure. The disc brake 3 is mounted by means of attachments on either side of the brake disc 16, allowing the brake to float in the lengthwise direction of the shaft 15. The disc brake is floatably mounted by means of detachable brake supporting elements 23 and 24 which attach the disc brake to the stator disc 18 on one side and to the support 6 fixed to the stator disc 18 on the other side. The support 6 and the stator disc 18 are fastened to each other by means of fixing elements 8 placed between the lugs 7 and with another fixing element 10 in the area of the shaft.

The spaces between the rotor disc 12 and the permanent magnets 30 as well as the corner between the stator disc and the permanent magnets are at least partially filled with non-mangetic filler material 33, such as polymerized resin, which is attached to the rotor disc 12 and permanent magnets 30. Magnetic particles as well as ordinary dust may gather in corners, and the purpose of the filler is to ensure that no such corners or recesses appear in the magnetic circuit. It is also possible to cover the magnets with a thin nonmagnetic sheet to protect the magnets and to facilitate cleaning. Any kind of particles are easier to remove from surfaces having no corners.

The permanent magnets 30 and the stator 9 are separated by an air gap 14 lying in a plane substantially perpendicular to the shaft 15 of the motor 2.

The stator disc 18 and the shaft 15 are integrated together as a single part, but naturally they can as well be implemented as separate parts joined together. Bearings 22 are provided between the stator disc 18 and the rotor disc 12.

The stator and rotor windings can be protected with a sealing 26a according to the invention even in the case of a disc-type motor in which the shaft is attached to the rotor disc 12. In this type of motor, the bearings are placed between the stator disc and the shaft attached to the rotor disc. Still, the things essential to the viability of the invention, i.e. forming the stator space as an annular cavity 19a and sealing this cavity with respect to the stator disc by means of a seal, are the same as in the motor design presented in Fig. 2.

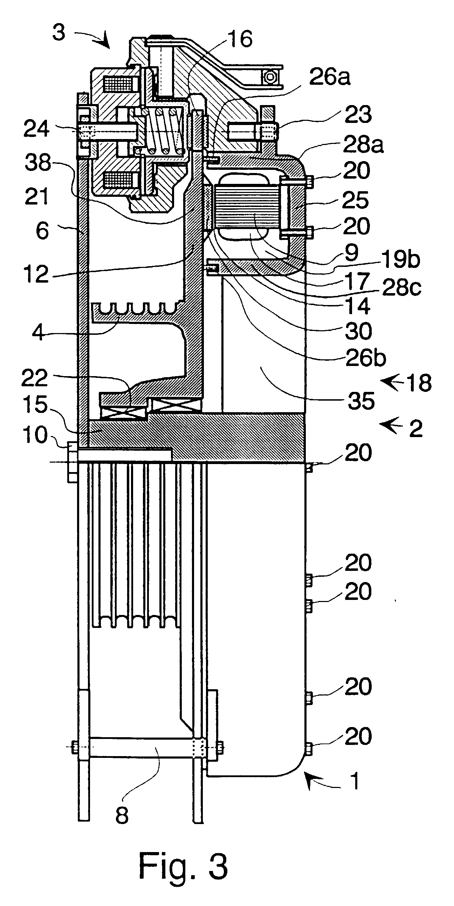

The motor in Fig. 3 is identical in structure with the motor in Fig. 2 except that the stator 9 is now placed in a cavity 19b having the shape of an annular capsule, formed by two stator disc walls 28a and 28c directed towards the rotor disc 12 and a wall 25 perpendicular to the shaft between them. One annular seal 26a is attached to the outer wall 28a of the cavity and the other annular seal 26b to its inner wall 28c lying closer to the shaft 15. The inner wall is attached to the shaft 15 by means of supporting ribs 35. Instead of supporting ribs it is also possible to use some other kind of support, e.g. an annular plate. The motor structure presented in Fig. 3 is especially suitable for motors with a large diameter.

It is obvious to a person skilled in the art that the embodiments of the invention are not restricted to the examples described above, but that they may instead be varied within the scope of the claims presented below.

## Claims

1. Elevator motor (2) comprising a stator (9), a shaft (15) and a rotor (13), in which the stator (9) with the stator winding (17) is placed in a stator disc (18) and the rotor (13) is formed in a rotor disc (12), characterized in that the stator disc (18) comprises a troughlike annular cavity (19a,19b) which is provided with walls (28a,25,28b,28c) and is open on one side, the open side and at least one of the walls (28a,28c) of said cavity (19a,19b) being directed towards the rotor disc (12), in which cavity (19a,19b) the stator (9) with its winding (17) is mounted, an annular sealing (26a,26b) being provided between the rotor disc (12) and at least one wall (28a,28c) directed towards the rotor and surrounding said cavity (19a,19b), said annular sealing (26a,26b) serving to isolate the cavity (19a,19b) so as to render it a closed space whose one wall is formed by the rotor disc (12).

2. Elevator motor (2) according to claim 1, characterized in that the troughlike cavity (19a,19b) is formed by at least one outer annular wall (28a) directed towards the rotor disc (12) and an inner annular wall (28b,28c), said walls (28a,28b) being joined together either directly or via a third wall (25) and that the inner wall (28b,28c) is attached to the shaft (15) either directly or by means of a supporting rib (35) and that a sealing (26a) is provided at least between the outer wall (28a) and the rotor disc (12).

3. Elevator motor (2) according to claim 2, characterized in that, of the walls surrounding the troughlike cavity (19a),both the outer wall (28a) and the inner wall (28c) are directed towards the rotor disc (12) and that a sealing (26a,26b) is provided between each one of the two walls (28a,28b) and the rotor disc (12).

4. Elevator motor (2) according to any one of claims 1 - 3, characterized in that the annular sealing (26a,26b) is attached to that edge of a wall (28a,28c) directed towards the rotor disc (12) which lies next to the rotor disc (12).

5. Elevator motor (2) according to any one claims 1 - 3, characterized in that the annular sealing (26a,26b) is attached to the rotor disc (12) at a location opposite to the edge of a wall directed towards the rotor disc (12).

6. Elevator motor (2) according to claim 4 or 5, characterized in that, to allow the annular sealing (26a,26b) to be fastened, the rotor disc (12) or the wall (28a,28b) directed towards the rotor disc (12) is provided with an integrated fixing element (27), such as a groove, for holding the sealing (26a,26b).

7. Elevator motor (2) according to any one of claims 4 - 6, characterized in that the sealing (26a,26b) is a felt, brush or lap seal or a combination, such as a magnetic band seal combined with a brush seal.

8. Elevator motor (2) according to any one claims 1 or 3, characterized in that the sealing (26a,26b) is a labyrinth seal in which the annular labyrinth grooves and ridges are integrated with the rotor disc (12) and with the wall (28a,28b) directed towards the rotor disc (12).

9. Elevator motor (2) according to claim 2 comprising a traction sheave (4) and a disc brake (3), which motor is provided with a bearing (22) between the stator disc (18) and the rotor disc (12),
characterized in that the rotor (13) is formed by permanent magnets (30) attached to the surface (36) of the rotor disc (12) so that the magnets form a ring-shaped circle,
that the traction sheave (4) is provided at the rotor disc (12), being attached to the side opposite to the permanent magnets (30) and having a diameter smaller than that of the circumference of the stator (9),
that the rotor disc (12) is provided with a ring-shaped brake disc (16) constituting an extension of the outermost circle of the rotor disc (12),
that the shaft (15) is integrated with the stator disc so as to form a single part with it,
that a supporting plate (6) is attached to the stator disc (18) and the disc brake (3) is mounted between said supporting plate (6) and the stator disc (18), and
that the sealing (26a) is provided between the outer wall (28a) and the rotor disc (12), which sealing is pressed against the surface of the rotor disc, in which cavity (19a,19b) are placed both the stator (9) and the permanent magnets (30) attached to the surface of the rotor disc (12).

## Patentansprüche

1. Aufzugsmotor (2) umfassend einen Stator (9), eine Welle (15) und einen Rotor (13), in welchem der Stator (9) mit der Statorwindung (17) in einer Statorscheibe (18) angeordnet und der Rotor (13) in einer Rotorscheibe (12) ausgebildet ist,
dadurch gekennzeichnet,
daß die Statorscheibe (18) einen trogartigen ringförmigen Hohlraum (19a, 19b) umfaßt, der mit Wänden (28a, 25, 28b, 28c) versehen und auf einer Seite offen ist, wobei die offene Seite und mindestens eine der Wände (28a, 28c) des Hohlraumes (19a, 19b) der Rotorscheibe (12) zugewandt sind, in welchem Hohlraum (19a, 19b) der Stator (9) mit seiner Windung (17) montiert ist, und
daß eine ringförmige Dichtung (26a, 26b) zwischen der Rotorscheibe (12) und mindestens einer dem Rotor zugewandten und den Hohlraum (19a, 19b) umgebenden Wand (28a, 28c) vorgesehen ist, wobei die ringförmige Dichtung (26a, 26b) zur Isolation des Hohlraumes (19a, 19b) dient, um ihn so als geschlossenen Raum zu halten, dessen eine Wand durch die Rotorscheibe (12) gebildet ist.

2. Aufzugsmotor (2) nach Anspruch 1, dadurch gekennzeichnet, daß der trogförmige Hohlraum (19a, 19b) mindestens durch eine der Rotorscheibe (12) zugewandte äußere ringförmige Wand (28a) und eine innere ringförmige Wand (28b, 28c) gebildet ist, wobei die Wände (28a, 28b) entweder direkt oder durch eine dritte Wand (25) miteinander verbunden sind, daß die innere Wand (28b, 28c) an der Welle (15) entweder direkt oder mittels einer Stützrippe (35) befestigt ist, und daß eine Dichtung (26a) zumindest zwischen der äußeren Wand (28a) und der Rotorscheibe (12) vorgesehen ist.

3. Aufzugsmotor (2) nach Anspruch 2, dadurch gekennzeichnet, daß von den Wänden, die den trogförmigen Hohlraum (19a) umgeben, sowohl die äußere Wand (28a) als auch die innere Wand (28c), der Rotorscheibe (12) zugewandt sind, und daß eine Dichtung (26a, 26b) zwischen jeder der beiden Wände (28a, 28b) und der Rotorscheibe (12) vorgesehen ist.

4. Aufzugsmotor (2) nach einem der Ansprüche 1 - 3, dadurch gekennzeichnet, daß die ringförmige Dichtung (26a, 26b) an der Kante einer der Rotorscheibe (12) zugewandten Wand (28a, 28c) befestigt ist, die der Rotorscheibe (12) am nächsten liegt.

5. Aufzugsmotor (2) nach einem der Ansprüche 1 - 3, dadurch gekennzeichnet, daß die ringförmige Dichtung (26a, 26b) an der Rotorscheibe (12) in einem Bereich gegenüber der Kante einer der Rotorscheibe (12) zugewandten Wand befestigt ist.

6. Aufzugsmotor (2) nach Anspruch 4 oder 5, dadurch gekennzeichnet, daß, um eine Befestigung der ringförmigen Dichtung (26a, 26b) zu ermöglichen, die Rotorscheibe (12) oder die der Rotorscheibe (12) zugewandte Wand (28a, 28b) mit einem integrierten Befestigungselement (27), wie z.B. einer Nut, zum Halten der Dichtung (26a, 26b) versehen ist.

7. Aufzugsmotor (2) nach einem der Ansprüche 4 - 6, dadurch gekennzeichnet, daß die Dichtung (26a, 26b) eine Filz-, eine Bürsten- oder eine Falzdichtung oder eine Kombination, wie beispielsweise eine magnetische Banddichtung kombiniert mit einer Bürstendichtung, ist.

8. Aufzugsmotor (2) nach Anspruch 1 oder 3, dadurch gekennzeichnet, daß die Dichtung (26a, 26b) eine Labyrinthdichtung ist, bei welcher die ringförmigen Labyrinthnuten und -stege in der Rotorscheibe (12) und der der Rotorscheibe (12) zugewandten Wand (28a, 28b) integriert sind.

9. Aufzugsmotor (2) nach Anspruch 2, umfassend eine Antriebsscheibe (4) und eine Scheibenbremse (3), wobei der Motor mit einem Lager (22) zwischen der Statorscheibe (18) und der Rotorscheibe (12) versehen ist, dadurch gekennzeichnet,
daß der Rotor (13) durch Permanentmagnete (30) gebildet ist, die an der Oberfläche (36) der Rotorscheibe (12) befestigt sind, so daß die Magnete einen ringförmigen Kreis bilden,
daß die Antriebsscheibe (4) an der Rotorscheibe (12) vorgesehen und an der den Permanentmagneten (30) entgegengesetzten Seite befestigt ist und einen Durchmesser aufweist, der kleiner als der des Stators (9) ist,
daß die Rotorscheibe (12) mit einer ringförmigen Bremsscheibe (16) versehen ist, die eine Erweiterung des äußersten Kreises der Rotorscheibe (12) bildet,
daß die Welle (15) mit der Statorscheibe integriert ist, um zusammen mit ihr ein einstückiges Teil zu bilden,
daß eine Stützplatte (6) an der Statorscheibe (18) befestigt ist, und die Scheibenbremse (3) zwischen der Stützplatte (6) und der Statorscheibe (18) montiert ist, und
daß die Dichtung (26a) zwischen der äußersten Wand (28a) und der Rotorscheibe (12) vorgesehen ist, wobei die Dichtung gegen die Oberfläche der Rotorscheibe gepreßt wird, wobei im Hohlraum (19a, 19b) sowohl der Stator (9) als auch die an der Oberfläche der Rotorscheibe (12) befestigten Permanentmagnete (30) angeordnet sind.

## Revendications

1. Moteur d'ascenseur (2) comprenant un stator (9), un arbre (15) et un rotor (13), dans lequel le stator (9) avec l'enroulement de stator (17) est placé dans un disque de stator (18) et le rotor (13) est sous la forme d'un disque de rotor (12), caractérisé en ce que le disque de stator (18) comprend une cavité annulaire en forme de goulotte (19a,19b) qui comporte des parois (28a,25,28b,28c) et qui est ouverte sur un côté, le côté ouvert et au moins une des parois (28a,28c) de ladite cavité (19a,19b) étant dirigésvers le disque de rotor (12), le stator (9) avec son enroulement (17) étant monté dans ladite cavité (19a,19b), un moyen d'étanchéité annulaire (26a,26b) étant prévu entre le disque de rotor (12) et au moins une paroi (28a,28c) dirigée vers le rotor et entourant ladite cavité (19a,19b), le dit moyen d'étanchéité annulaire (26a,26b) servant à isoler la cavité (19a,19b) de façon à en faire un espace fermé dont une paroi est constituée par le disque de rotor (12).

2. Moteur d'ascenseur (2) selon la revendication 1, caractérisé en ce que la cavité en forme de goulotte (19a,19b) est définie par au moins une paroi annulaire extérieure (28a) dirigée vers le disque de rotor (12) et une paroi annulaire intérieure (28b,28c),lesdites parois (28a,28b) étant reliées l'une à l'autre directement ou par l'intermédiaire d'une troisième paroi (25), et en ce que la paroi intérieure (28b,28c) est fixée à l'arbre (15) directement ou au moyen d'une nervure de support (35), et en ce qu'un moyen d'étanchéité (26a) est prévu au moins entre la paroi extérieure (28a) et le disque de rotor (12).

3. Moteur d'ascenseur (2) selon la revendication 2, caractérisé en ce que, parmi les parois entourant la cavité en forme de goulotte (19a), à la fois la paroi extérieure (28a) et la paroi intérieure (28c) sont dirigées vers le disque de rotor (12), et en ce qu'un moyen d'étanchéité (26a,26b) est prévu entre chacune des deux parois (28a,28b) et le disque de rotor (12).

4. Moteur d'ascenseur (2) selon une quelconque des revendications 1 à 3, caractérisé en ce que le moyen d'étanchéité annulaire (26a,26b) est attaché au bord d'une paroi (28a,28c) , dirigée vers le disque de rotor (12), qui est adjacent au disque de rotor (12).

5. Moteur d'ascenseur (2) selon une quelconque des revendications 1 à 3, caractérisé en ce que le moyen d'étanchéité annulaire (26a,26b) est attaché au disque de rotor (12) à un endroit opposé au bord d'une paroi dirigée vers le disque de rotor (12).

6. Moteur d'ascenseur (2) selon la revendication 4 ou 5, caractérisé en ce que, pour permettre la fixation du moyen d'étanchéité annulaire (26a,26b), le disque de rotor (12) ou la paroi (28a,28b) dirigée vers le disque de rotor (12) comporte un élément de fixation intégré (27), par exemple une rainure, pour tenir le moyen d'étanchéité (26a,26b).

7. Moteur d'ascenseur (2) selon une quelconque des revendications 4 à 6, caractérisé en ce que le moyen d'étanchéité (26a,26b) est un feutre, une brosse ou une garniture à recouvrement ou une combinaison, par exemple un élément d'étanchéité à bande magnétique combiné avec un élément d'étanchéité à brosse.

8. Moteur d'ascenseur (2) selon une quelconque des revendications 1 ou 3, caractérisé en ce que le moyen d'étanchéité (26a,26b) est une étanchéité à labyrinthe dans laquelle les gorges et les crêtes annulaires du labyrinthe sont intégrées au disque de rotor (12) et à la paroi (28a,28b) dirigée vers le disque de rotor (12).

9. Moteur d' ascenseur (2) selon la revendication 2, comprenant une poulie de traction (4) et un frein à disque (3), le dit moteur étant pourvu d'un palier (22) entre le disque de stator (18) et le disque de rotor (12),
caractérisé en ce que :
le rotor (13) est formé par des aimants permanents (30) attachés à la surface (36) du disque de rotor (12) de sorte que les aimants définissent un cercle annulaire,
la poulie de traction (4) est prévue sur le disque de rotor (12), elle est attachée au côté opposé aux aimants permanents (30) et elle a un diamètre plus petit que celui de la circonférence du stator (9),
le disque de rotor (12) est pourvu d'un disque de frein annulaire (16 ) constituant un prolongement du cercle le plus extérieur du disque de rotor (12),
l'arbre (15) est intégré au disque de stator de façon à former une pièce unique avec ce dernier ;
une plaque de support (6) est attachée au disque de stator (18) et le frein à disque (3) est monté entre ladite plaque de support (6) et le disque de stator (18), et
l'étanchéité (26a) est prévue entre la paroi extérieure (28a) et le disque de rotor (12), cette étanchéité étant pressée contre la surface du disque de rotor, à la fois le stator (9) et les aimants permanents (30) attachés à la surface du disque de rotor (12) étant placés dans ladite cavité (19a ,19b).
